# EUROPÄISCHE PATENTANMELDUNG

(11) **EP 4 163 073 A1**
(43) Veröffentlichungstag der Anmeldung: **12.04.2023**
(21) Anmeldenummer: 21201979.8
(22) Anmeldetag: 11.10.2021
(51) Int. Cl.: B29B 9/06, B29B 9/14, B29C 48/00

(54) **VORRICHTUNG UND VERFAHREN ZUR HERSTELLUNG EINES FASERHALTIGEN KUNSTSTOFFGRANULATS**

(71) Anmelder: Burger Industry Consulting GmbH, 5405 Dättwil (CH)
(72) Erfinder: Burger, Martin, 5405 Dättwil (CH)
(74) Vertreter: Herrmann, Johanna

(57) **Zusammenfassung**

Vorrichtung (10) und Verfahren zur Herstellung eines ULFT-Granulats (1), wobei das ULFT-Granulat (1) ein thermoplastisches Polymer (2) und eine Mehrzahl von Verstärkungsfasern (3) umfasst. Die Vorrichtung (10) umfasst einen Strangantrieb (11), ein Heizelement (12), ein Formwerkzeug (13), eine Kühlvorrichtung (14) und eine Schneidvorrichtung (15), wobei im Betriebszustand ein LFT-Strang (16) mittels eines Strangantriebs (11) durch den Heiz- und Presskanal (22) des Heizelements (12) in den ersten Kanalabschnitt (24) des Formwerkzeuges einpressbar ist. Das thermoplastische Polymer (2) des LFT-Strangs (16) ist im Heizkanal (22) schmelzbar. Die hierbei entstehende aufgeschmolzene LFT-Strangmasse (17) ist dem Formwerkzeug (13) zuführbar. Das Formwerkzeug (13) enthält einen Schmelzekanal (23), dessen Querschnittsfläche sich im Formwerkzeug (13) vergrössert, sodass eine aufgeschmolzene ULFT-Strangmasse (18) erhältlich ist, die in der Kühlvorrichtung (14) zu einem gekühlten ULFT-Strang (21) kühlbar ist, wobei der gekühlte ULFT-Strang (21) der Schneidvorrichtung (15) zuführbar ist, der mittels der Schneidvorrichtung (15) in das ULFT-Granulat (1) transformierbar ist.

## Beschreibung

Die Erfindung betrifft eine Vorrichtung und ein Verfahren zur Herstellung eines faserhaltigen Kunststoffgranulats, enthaltend Langfasern.

Gemäss des US-Patents US 5 595 696 werden Langfasergranulate durch vier unterschiedliche Verfahren hergestellt, der in-situ Polymerisation, der Pulverimprägnierung, der Schmelzeummantelung sowie der Schmelzeimprägnierung. Insbesondere wird eine Extrusionscompoundierung verwendet.

Der Kunststoff bildet die kontinuierliche Phase aus, die Faser eine disperse Phase. Der Kunststoff wird auch als Matrixmaterial bezeichnet. Der Kunststoff kann mindestens ein Element aus der Gruppe bestehend aus thermoplastischen Kunststoffen enthalten.

Um ein Langfaserthermoplastgranulat, nachfolgend als LFT-Granulat bezeichnet, herzustellen, wird typischerweise eine Pultrusion-Anlage mit den Komponenten Spulengatter, Spanneinrichtung, Vorheizung, Extruder, Imprägnierwerkzeug, Kühler mit Formrollen, Puller und Stranggranulator verwendet.

Dabei handelt es sich um ein kontinuierliches Herstellverfahren, bei dem Faserbündel durch ein formgebendes Werkzeug gezogen werden und mit einer Thermoplast-Schmelze imprägniert werden, welche aus einem Schnecken-Extruder zugeführt wird. Dann wird die Thermoplast-Temperatur in einer nachgeschalteter Kühlstrecke unter dem Schmelzpunkt abgekühlt und es entsteht ein endloser, formstabiler Strang, das heisst, ein Faser-Polymerstrang, nachfolgend als LFT-Strang bezeichnet. Zur Herstellung des LFT-Granulats wird der ausgetragene LFT-Strang in ca. 6-25 mm lange Pellets geschnitten.

Aufgrund der vorherigen Prozessbeschreibung sind die Faserlängen in LFT-Granulaten meist gleich lang wie die Abschnittlängen des durch Pultrusion hergestellten LFT-Stranges und liegen in der Regel in einem Bereich zwischen 6 und 25 mm.

Zur Erreichung von hohen mechanischen Kennwerten in Spritzgussbauteilen sind grosse Faserlängen im LFT-Granulat erwünscht. Doch je länger die Pellets sind, desto eher führen sie zu Verstopfungen und Anlagestörungen im Extruder-Einlaufbereich. Die vorgeschlagene Innovation ermöglicht im ULFT-Granulat (Ultra-Langfaser-Thermoplast-Granulat) die Erreichung von Faserlängen, die ein Vielfaches der Granulat-Länge betragen.

Es ist beispielsweise aus der WO2011022852 A1 bekannt, Granulate aus Polymermaterial mit integrierter Langfaserverstärkung herzustellen, wobei die Granulate als Wickelelemente ausgebildet sind, welche Endlosfaserstränge aus mit dem Polymermaterial imprägnierten Endlos-Verstärkungsfasern aufweisen. Die Wickelelemente enthalten mehr als eine Windung der imprägnierten Endlosfasersträngen, die Windungen überlappen mindestens teilweise und sind übereinander und/oder nebeneinander angeordnet.

Die Herstellung derartiger Wickelelemente erfordert das Abwickeln eines Rovings aus Endlos-Verstärkungsfasern und das Imprägnieren der Endlos-Verstärkungsfasern mit geschmolzenem oder flüssigem Polymermaterial zur Bildung eines imprägnierten Endlosfaserstrangs. Nach Herstellung des imprägnierten Endlosfaserstrangs muss dieser aufgewickelt werden, wobei übereinander und/oder nebeneinander liegende Windungen um eine Wickelachse gebildet werden, die Wicklungen im Anschluss in Axialrichtung verschoben werden, wobei die Wicklungen verfestigt werden und anschliessend die Wicklungen in definierten Abschnitten durchschnitten werden, sodass ein Granulat entsteht, welches ein derart hergestelltes Wickelelement enthält.

Mit diesem Verfahren ist ein Granulat herstellbar, welches Langfasern enthält, die eine grössere Länge als das Granulat aufweisen. Die Herstellung der Wickelelemente ist allerdings aufwändig, da eine Rotationsbewegung des als Wickelachse ausgebildeten drehbaren Wickelkerns mit einer axialen Vorschubbewegung kombiniert werden muss.

Daher besteht Bedarf an einem faserhaltigen Kunststoffgranulat, welches Fasern enthält, die länger als die grösste Dimension des Granulats sind, wobei die grösste Dimension auch als Längenabmessung des Granulats bezeichnet wird, welches mittels eines einfachen Verfahrens in einer einfacheren Anlage herstellbar ist.

Die Lösung der Aufgabe erfolgt durch ein Verfahren gemäss Anspruch 1, eine Vorrichtung gemäss Anspruch 8 sowie ein faserhaltiges Kunststoffgranulat gemäss Anspruch 13. Vorteilhafte Verfahrensvarianten sind Gegenstand der Ansprüche 2 bis 7. Vorteilhafte Ausgestaltungen der Vorrichtung sind Gegenstand der abhängigen Ansprüche 9 bis 12.

Das erfindungsgemässe faserhaltige Kunststoffgranulat wird nachfolgend als ULFT-Granulat bezeichnet. Ein Faser-Polymerstrang wird nachfolgend als LFT-Strang bezeichnet. Ein ULFT-Granulat umfasst ein thermoplastisches Polymer und eine Mehrzahl von Verstärkungsfasern eines LFT-Strangs, wobei die Verstärkungsfasern eines LFT-Strangs gestaucht und umgelagert, insbesondere nach Stauchung der Schmelzmasse mehrfach umgelagert sind, sodass ultralange Verstärkungsfasern erhalten werden. Ein ULFT-Granulat entspricht daher einem Ultralangfaser-Thermoplast-Granulat. Die Verstärkungsfasern weisen eine Faserlänge auf, wobei die Faserlänge der Länge der Faser in gestrecktem Zustand entspricht, das heisst, Länge wird vom ersten Ende der Faser zu deren zweitem Ende gemessen. Das ULFT-Granulat weist eine Längsabmessung auf, wobei die Längsabmessung dem Abstand zwischen der ersten Schneidkante und der gegenüberliegenden zweiten Schneidkante entspricht oder, falls diese länger ist, der längsten Dimension des ULFT-Granulates. Die Verstärkungsfasern weisen eine Faserlänge auf, wobei die Faserlänge zumindest eines Teils der Verstärkungsfasern im ULFT-Granulat mindestens 1,5-mal so lang wie die Längsabmessung ist. Insbesondere kann die Faserlänge zumindest eines Teils der Verstärkungsfasern im ULFT-Granulat mindestens doppelt so lang wie die Längsabmessung sein.

Die Faserlänge der Verstärkungsfasern im ULFT-Granulat kann in einem Bereich von 1 mm bis einschliesslich 200 mm liegen, wenn die Längsabmessung des ULFT-Granulats im Bereich von 6 mm bis einschliesslich 16 mm liegt und die Querschnittsfläche des ULFT-Granulats im Bereich von 10 mm² bis einschliesslich 80 mm² liegt.

Beim ULFT-Granulat kann der Gewichtsanteil der Verstärkungsfasern zwischen von 10%-80% liegen.

Das ULFT-Granulat kann mittels eines Verfahrens gemäss eines der nachfolgenden Ausführungsbeispiele hergestellt werden.

Das Verfahren zur Herstellung eines ULFT-Granulats enthaltend ein thermoplastisches Polymer und eine Mehrzahl von Verstärkungsfasern umfasst die Schritte des Erzeugens oder Bereitstellens eines LFT-Strangs, enthaltend das thermoplastische Polymer und die Verstärkungsfasern, des Bewegens des LFT-Strangs mittels eines Strangantriebs in ein Heizelement, welches einen Heiz- und Presskanal enthält, des Erwärmens des LFT-Strangs im Heiz- und Presskanal und des Aufschmelzens des thermoplastischen Polymers im Heiz-und Presskanal, wodurch eine aufgeschmolzene LFT-Strangmasse erhalten wird, wobei die aufgeschmolzene LFT-Strangmasse in einen Schmelzekanal eines Formwerkzeugs eingepresst wird. Das Formwerkzeug enthält einen ersten Kanalabschnitt und einen zweiten Kanalabschnitt des Schmelzekanals, wobei der zweite Kanalabschnitt an den ersten Kanalabschnitt anschliesst, wobei die Querschnittsfläche des zweiten Kanalabschnitts grösser als die Querschnittsfläche des ersten Kanalabschnitts ist, sodass die aufgeschmolzene LFT-Strangmasse im Formwerkzeug gestaucht wird und in eine aufgeschmolzene ULFT-Strangmasse umgewandelt wird. Die aufgeschmolzene ULFT-Strangmasse wird im Formwerkzeug gekühlt, sodass ein vorgekühlter ULFT-Strang erhalten wird und der vorgekühlte ULFT-Strang wird in der Kühlvorrichtung gekühlt, sodass ein gekühlter ULFT-Strang erhalten wird. Der gekühlte ULFT-Strang wird mittels einer Schneidvorrichtung durchtrennt, sodass das ULFT-Granulat erhalten wird. Die im ULFT-Granulat eingeschlossenen Fasern sind länger als das ULFT-Granulat.

Das Formwerkzeug enthält keine rotierenden Bauteile. Insbesondere enthält das Formwerkzeug keinen drehbaren Wickelkern oder eine andere Art von Drehvorrichtung, in welcher der LFT-Strang um seine eigene Achse gedreht wird, wie beispielsweise in der WO0058064 A1 gezeigt.

Gemäss eines Ausführungsbeispiels weist der zweite Kanalabschnitt eine Querschnittsfläche auf, die mindestens doppelt so gross wie die Querschnittsfläche des Heiz- und Presskanals ist.

Insbesondere erfolgt im zweiten Kanalabschnitt eine Stauchung und Umlagerung der aufgeschmolzenen LFT-Strangmasse, wodurch die aufgeschmolzene ULFT-Strangmasse erhalten wird.

Gemäss eines Ausführungsbeispiels sind der erste und zweite Kanalabschnitt des Schmelzekanals als ein zylinderförmiger oder ovaler oder rechteckförmiger Innenraum des Formwerkzeugs ausgebildet. Die aufgeschmolzene ULFT-Strangmasse wird im Formwerkzeug gekühlt, sodass ein vorgekühlter ULFT-Strang erhalten wird.

Der vorgekühlte ULFT-Strang wird in der Kühlvorrichtung gekühlt, wobei die Kühlvorrichtung zwischen dem Formwerkzeug und der Schneidvorrichtung angeordnet ist.

Gemäss eines Ausführungsbeispiels wird der gekühlte ULFT-Strang der Schneidvorrichtung mittels einer Abzugsvorrichtung zugeführt, wobei die Abzugsvorrichtung zwischen dem Formwerkzeug und der Schneidvorrichtung angeordnet ist.

Gemäss eines Ausführungsbeispiels wird der LFT-Strang von einer Rolle abgewickelt und mittels des Strangantriebs dem Heiz- und Presskanal zugeführt.

Nachfolgend wird eine erfindungsgemässe Vorrichtung zur Herstellung eines ULFT-Granulats beschrieben, wobei das ULFT-Granulat ein thermoplastisches Polymer und eine Mehrzahl von Verstärkungsfasern enthält. Die erfindungsgemässe Vorrichtung umfasst einen Strangantrieb, ein Heizelement, ein Formwerkzeug, eine Kühlvorrichtung und eine Schneidvorrichtung. Im Betriebszustand der Vorrichtung ist ein LFT-Strang dem Heizelement mittels eines Strangantriebs zuführbar, wobei der Strangantrieb ausgebildet ist, eine Vorschubbewegung des LFT-Strangs zu erzeugen. Zudem wird mit dem Strangantrieb der für das Aufschmelzen und die Umformung erforderliche Druck erzeugt. Der LFT-Strang ist vom Strangantrieb in einen Heiz- und Presskanal des Heizelements einführbar. Das thermoplastische Polymer des LFT-Strangs wird im Heiz- und Presskanal mittels des Heizelements aufgeschmolzen, sodass im Heiz- und Presskanal eine aufgeschmolzene LFT-Strangmasse erhältlich ist. Die aufgeschmolzene LFT-Strangmasse ist in das Formwerkzeug einpressbar, weil der LFT-Strang auf der Anlagenzuführseite noch kalt und formstabil ist und durch den Strangantrieb der dafür notwendige Druck aufgebaut werden kann. Das Formwerkzeug enthält einen Schmelzekanal, wobei der Schmelzekanal einen ersten Kanalabschnitt und einen zweiten Kanalabschnitt enthält, wobei der zweite Kanalabschnitt an den ersten Kanalabschnitt anschliesst, wobei der zweite Kanalabschnitt eine Querschnittsfläche aufweist, die grösser als eine Querschnittsfläche des ersten Kanalabschnitts ist, sodass das Formwerkzeug ausgebildet ist, die Querschnittsfläche der aufgeschmolzenen LFT-Strangmasse zu erhöhen, sodass eine aufgeschmolzene ULFT-Strangmasse erhältlich ist. Die aufgeschmolzene ULFT-Strangmasse ist im Formwerkzeug und in der Kühlvorrichtung kühlbar, sodass ein gekühlter ULFT-Strang erhältlich ist. Der gekühlte ULFT-Strang ist der Schneidvorrichtung zuführbar, wobei der gekühlte ULFT-Strang mittels der Schneidvorrichtung in das ULFT-Granulat transformierbar ist.

Der Heiz- und Presskanal des Heizelementes, das Formwerkzeug mit dem ersten Kanalabschnitt und dem zweiten Kanalabschnitt und die Kühlvorrichtung kann einteilig, zweiteilig oder mehrteilig ausgeführt werden.

Gemäss eines Ausführungsbeispiels ist die Kühlvorrichtung zwischen dem Formwerkzeug und der Schneidvorrichtung angeordnet. Insbesondere wird die aufgeschmolzene ULFT-Strangmasse im Formwerkzeug gekühlt, sodass ein vorgekühlter ULFT-Strang erhältlich ist. Der vorgekühlte ULFT-Strang wird anschliessend der Kühlvorrichtung zugeführt, sodass der gekühlte ULFT-Strang erhalten wird.

Gemäss eines Ausführungsbeispiels ist zwischen dem Formwerkzeug und der Schneidvorrichtung eine Abzugsvorrichtung angeordnet.

Gemäss eines Ausführungsbeispiels ist die Querschnittsfläche des zweiten Kanalabschnitts mindestens doppelt so gross wie die Querschnittsfläche des ersten Kanalabschnitts. Dadurch finden die Fasern der aufgeschmolzenen LFT-Strangmasse in der aufgeschmolzenen ULFT-Strangmasse mehr Raum, um gestaucht zu werden und sich in verschiedene Richtungen abzulegen.

Gemäss eines Ausführungsbeispiels ist der Strangantrieb als ein Rollenantrieb ausgebildet, um den LFT-Strang dem Heiz- und Presskanal von einer Rolle zuzuführen.

Das ULFT-Granulat kann ein thermoplastisches Polymer aus der Gruppe der Polystyrole, Styrol-Acrylnitril-Copolymere (SAN), Acrylnitril-Butadien-Styrol-Copolymere (ABS), Polyolefine, Polypropylene, Polyethylene, Polyoxymethylene (POM), Polyvinylchloride, Polyacrylnitrile, Polyamide (PA), Polyethylenterephthalate (PET), Polybutylenterepththalate (PBT), Polycarbonate, Polymethylmethacrylate (PMMA), Polyetherimide, Polyamidimide (PAI), Polyetherketone, Polyetheretherketone (PEEK), Polyethersulfone (PES), Polyphenylensulfone (PPSU), Polyphenylensulfide (PPS), Polyacrylate, thermoplastische Elastomere (TPE), Polysulfone (PSU), Polyphthalamide (PPA), Polymilchsäuren (PLA) und andere Biopolymere oder Mischungen davon enthalten.

Das thermoplastische Polymer kann zumindest teilweise ein Kunststoffrecyclat enthalten.

Ein Polyolefin kann insbesondere ein Polypropylen (PP) oder Polyethylen (PE) umfassen, beispielsweise LDPE, MDPE, HDPE. Insbesondere kann das thermoplastische Polymer aus einem oder mehreren thermoplastischen Kunststoffen bestehen.

Die Verstärkungsfasern können beispielsweise Glasfasern, Kohlenstofffasern, Stahlfasern, Aramidfasern oder Naturfasern, beispielsweise Sisalfasern, Flachsfasern, Kokosfasern, Hanffasern, Bambusfasern umfassen. Die Rezeptur kann weitere Feststoffe in Form von Additiven und oder Füllstoffen enthalten.

Das erfindungsgemässe Verfahren kann auch als Strang-zu-Strang Pressumformung bezeichnet werden, da es mit dem Strangpressverfahren von Kunststoffprofilen vergleichbar ist. Beim üblichen Strangpressverfahren wird das thermoplastische Material als Schüttgut in einem Extruder aufgeschmolzen. Mittels des Extruders wird der erforderliche Druck erzeugt, um den aufgeschmolzenen Kunststoff durch ein formgebendes Werkzeug zu pressen. Für den erfindungsgemässen Umformprozess zur Herstellung von ULFT-Granulat ist ein Extruder aber ungeeignet, da lange Fasern aufgrund der hohen Scherkräfte im Extruder brechen und durch die Verarbeitung im Extruder verkürzt würden. Die im Extruder ungeordnet transportierten Fasern des verflüssigten Polymer-Fasergemisches können nicht wie im ULFT-Strang längenoptimiert gestaucht und umgelagert werden.

Insbesondere kann für die Strang-zu-Strang Pressumformung ein abgekühlter, Endlosfaser-Thermoplast-Strang, nachfolgend als LFT-Strang bezeichnet, als Ausgangsmaterial zur Herstellung von ULFT-Granulat verwendet werden. Dabei ist die Steifigkeit und die hohe mechanische Belastbarkeit des ULFT-Strangs ein grosser Vorteil für den weiteren Verfahrensablauf. Der ULFT-Strang wird kontinuierlich oder intermittierend über einen Strangantrieb in einen Heiz- und Presskanal eines Heizelements gefahren. Mittels des Strangantriebs wird der notwendige Druck erzeugt, sodass der LFT-Strang im Heiz- und Presskanal vorwärts geschoben wird, wobei das thermoplastische Polymer des LFT-Strangs aufschmilzt und verflüssigt wird.

Durch den im Heiz- und Presskanal durch den Strangantrieb aufgebauten Druck wird die aufgeschmolzene und somit verflüssigte LFT-Strangmasse anschliessend in das Formwerkzeug eingepresst. Durch den Unterschied der Querschnittsfläche des ersten Kanalabschnitts und des zweiten Kanalabschnitts im Formwerkzeug bewegt sich die aufgeschmolzene ULFT Strangmasse im zweiten Kanalabschnitt langsamer als die aufgeschmolzene LFT-Strangmasse im ersten Kanalabschnitt und fängt an, sich im zweiten Kanalabschnitt abzukühlen. Die noch aufgeschmolzene ULFT-Strangmasse schiebt dabei den sich abkühlenden ULFT-Strang vor sich her, dabei legen sich die in diesem Zustand flexiblen Verstärkungsfasern aufeinander ab. Durch den Fliesswiderstand im zweiten Kanalabschnitt des Formwerkzeuges und den Widerstand in der Kühlvorrichtung wird der für die Stauchung und Umlagerung der Fasern des verflüssigten LFT-Strangs, d.h. der aufgeschmolzenen LFT-Strangmasse, notwendige Gegendruck erzeugt. Nach dem Abkühlen in der Kühlvorrichtung wird der gekühlte ULFT-Strang mittels der Schneidvorrichtung in ULFT-Granulat geschnitten. Das Formwerkzeug kann Kühlkanäle für ein Kühlmittel enthalten.

Ein erfindungsgemässes ULFT-Granulat umfasst ein thermoplastisches Polymer und eine Mehrzahl von Verstärkungsfasern, wobei die Verstärkungsfasern eines LFT-Strangs in einer ULFT-Strangmasse gestaucht und umgelagert sind und durch Abkühlung ein vorgekühlter ULFT-Strang und ein gekühlter ULFT-Strang erhältlich sind. Der vorgekühlte und gekühlte ULFT-Strang enthalten die gestauchten und umgelagerten Verstärkungsfasern. Der vorgekühlte und gekühlte ULFT-Strang ergibt in geschnittener Form das ULFT-Granulat, wobei das ULFT-Granulat eine Längsabmessung aufweist. Die Verstärkungsfasern weisen eine Faserlänge auf, wobei die Faserlänge zumindest eines Teils der Verstärkungsfasern im ULFT-Granulat mindestens 1,5-mal so lang wie die Längsabmessung ist. Insbesondere kann die Faserlänge zumindest eines Teils der Verstärkungsfasern im ULFT-Granulat mindestens doppelt so lang wie die Längsabmessung sein.

Gemäss eines Ausführungsbeispiels liegt die Faserlänge der Verstärkungsfasern in einem Bereich von 1 mm bis einschliesslich 200 mm, wenn die Granulat-Länge im Bereich von 6 mm bis einschliesslich 16 mm liegt und die Granulat-Querschnittsfläche im Bereich von 10 mm² bis einschliesslich 80 mm² liegt.

Das erfindungsgemäss hergestellte ULFT-Granulat eignet sich insbesondere für die Verarbeitung in Spritzgussanlagen. Das ULFT-Granulat kann zur Herstellung von Bauteilen verwendet werden, die höheren spezifischen Belastungen ausgesetzt werden können als vergleichbare Bauteile aus den Ausgangsmaterialien. Die längeren Verstärkungsfasern erhöhen im fertigen Spritzgussteil die Steifigkeit, Festigkeit und Schlagzähigkeit des Bauteils. Folglich können Material, Gewicht und je nach Anwendungsfall auch Kosten eingespart werden.

Ein mittels des erfindungsgemässen Verfahrens hergestelltes ULFT-Granulat, enthaltend Verstärkungsfasern mit einer Faserlänge von mindestens 25 mm kann in Extrudern besser verarbeitet werden als herkömmliches LFT-Granulat mit einer vergleichbaren Faserlänge.

Die Verstärkungsfasern in einem ULFT-Granulat können besser mit thermoplastischem Polymer benetzt werden, weil der LFT-Strang gemäss den Ausführungsbeispielen der Erfindung nochmals erwärmt und umgeformt wird.

Das vorgängig beschriebene erfindungsgemässe Verfahren kann in bestehende Pultrusions-Anlagen zur Herstellung von LFT-Granulat integriert werden.

Die erfindungsgemässe Vorrichtung kann mit einem LFT-Strang, der als Endlosstrang ausgebildet ist, ab Rolle beschickt werden.

ULFT-Granulat kann in bestehenden Verfahren und Anlagen verarbeitet werden, in welchen LFT-Granulate verarbeitet werden, wobei bei Verwendung des erfindungsgemässen ULFT-Granulats wesentlich längere Verstärkungsfasern im fertigen Bauteil vorhanden sind.

Nachfolgend wird die erfindungsgemässe Vorrichtung und das erfindungsgemässe Verfahren anhand einiger Ausführungsbeispiele dargestellt. Es zeigen
Fig. 1 ein faserhaltiges Kunststoffgranulat,
Fig. 2 ein erstes Ausführungsbeispiel einer Vorrichtung zur Herstellung eines ULFT-Granulats zur Durchführung des erfindungsgemässen Verfahrens,
Fig. 3 ein Detail der Vorrichtung zur Durchführung des Verfahrens zur Herstellung des faserhaltigen Kunststoffgranulats gemäss Fig. 1,
Fig. 4 ein zweites Ausführungsbeispiel einer Vorrichtung zur Herstellung eines ULFT-Granulats,
Fig. 5 ein drittes Ausführungsbeispiel einer Vorrichtung zur Herstellung eines ULFT-Granulats.

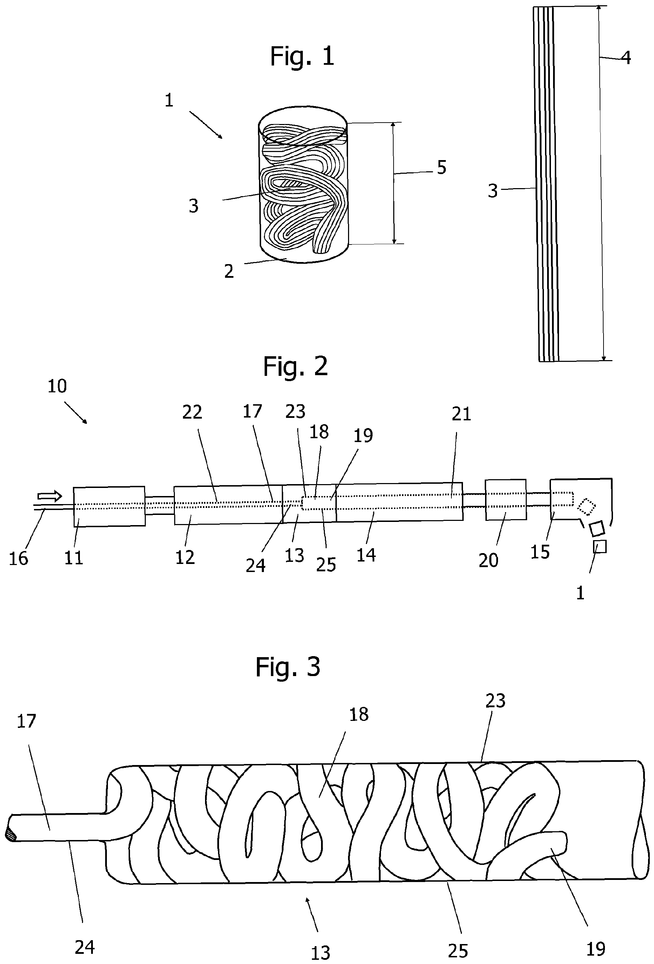

Fig. 1 zeigt ein Ausführungsbeispiel eines ULFT-Granulats 1, umfassend ein thermoplastisches Polymer 2 und eine Mehrzahl von Verstärkungsfasern 3. Die Verstärkungsfasern 3 eines LFT-Strangs 16 sind gestaucht und mehrfach umgelagert. Die Verstärkungsfasern 3 weisen eine Faserlänge 4 auf. Das faserhaltige Kunststoffgranulat 1 weist eine Längsabmessung 5 auf, wobei ein Teil der Fasern 4 mindestens 1,5-mal so lang wie die Längsabmessung 5 ist. Insbesondere kann die Faserlänge 4 zumindest eines Teils der Verstärkungsfasern doppelt so lang wie die Längsabmessung 5 sein.

Fig. 2 zeigt eine Vorrichtung 10 zur Herstellung eines ULFT-Granulats 1, wobei das ULFT-Granulat 1 ein thermoplastisches Polymer 2 und eine Mehrzahl von Verstärkungsfasern 3 umfasst. Die Vorrichtung 10 umfasst einen Strangantrieb 11, ein Heizelement 12, ein Formwerkzeug 13, eine Kühlvorrichtung 14 und eine Schneidvorrichtung 15. Im Betriebszustand ist ein LFT-Strang 16 dem Strangantrieb 11 zuführbar, wobei der Strangantrieb 11 ausgebildet ist, eine Vorschubbewegung des LFT-Strangs 16 zu erzeugen. Der LFT-Strang 16 ist vom Strangantrieb 11 in einen Heiz- und Presskanal 22 des Heizelements 12 einführbar, wobei das thermoplastische Polymer 2 des LFT-Strangs 16 im Heiz- und Presskanal 22 schmelzbar ist, sodass im Heiz- und Presskanal 22 eine aufgeschmolzene LFT-Strangmasse 17 erhältlich ist.

Die aufgeschmolzene LFT-Strangmasse 17 ist einem Formwerkzeug 13 zuführbar, wobei das Formwerkzeug 13 einen Schmelzekanal 23 enthält, dessen Querschnittsfläche im Formwerkzeug 13 zunimmt, sodass das Formwerkzeug 13 ausgebildet ist, die Querschnittsfläche der aufgeschmolzenen LFT-Strangmasse 17 zu erhöhen, sodass eine aufgeschmolzene ULFT-Strangmasse 18 erhältlich ist. Der Schmelzekanal 23 enthält einen ersten Kanalabschnitt 24 und einen zweiten Kanalabschnitt 25, wobei der zweite Kanalabschnitt 25 an den ersten Kanalabschnitt 24 anschliesst. Der zweite Kanalabschnitt 25 weist eine Querschnittsfläche auf, die grösser als eine Querschnittsfläche des ersten Kanalabschnitts 24 ist. Durch den Unterschied der Querschnittsfläche des ersten Kanalabschnitts 24 und des zweiten Kanalabschnitts 25 bewegt sich die aufgeschmolzene ULFT-Strangmasse 18 im zweiten Kanalabschnitt 25 langsamer als die aufgeschmolzene LFT-Strangmasse 17 im ersten Kanalabschnitt 24 und fängt an, sich im zweiten Kanalabschnitt 25 langsam abzukühlen, sodass ein vorgekühlter ULFT-Strang 19 erhalten wird. Die Abkühlung kann beschleunigt werden, indem die Wände des zweiten Kanalabschnitts 25 gekühlt werden, beispielsweise durch Zirkulation eines Kühlmittels. Die aufgeschmolzene LFT-Strangmasse 17 wird dabei auf die sich abkühlende aufgeschmolzene ULFT-Strangmasse 18 geschoben und schiebt diese dadurch vorwärts, dabei legen sich die in diesem Zustand flexiblen Verstärkungsfasern aufeinander ab. Die aufgeschmolzene ULFT-Strangmasse 18 ist im Formwerkzeug 13 zum vorgekühlten ULFT-Strang 19 kühlbar und anschliessend in der Kühlvorrichtung 14 kühlbar, sodass ein gekühlter ULFT-Strang 21 erhältlich ist. Der gekühlte ULFT-Strang 21 ist der Schneidvorrichtung 15 zuführbar. Der gekühlte ULFT-Strang 21 ist mittels der Schneidvorrichtung 15 in das ULFT-Granulat 1 transformierbar.

Insbesondere kann der zweite Kanalabschnitt 25 eine Querschnittsfläche aufweisen, die mindestens doppelt so gross wie die Querschnittsfläche des ersten Kanalabschnittes 24 ist.

Der Heiz- und Presskanal des Heizelementes 12, das Formwerkzeug 13 mit dem ersten Kanalabschnitt 24 und dem zweiten Kanalabschnitt 25 und die Kühlvorrichtung 14 kann einteilig, zweiteilig oder mehrteilig ausgeführt werden.

Der LFT-Strang 16 wird dem Heiz- und Presskanal 22 mittels des Strangantriebs 11 kontinuierlich oder intermittierend zugeführt.

Ein Verfahren zur Herstellung eines ULFT-Granulats 1 enthaltend ein thermoplastisches Polymer 2 und eine Mehrzahl von Verstärkungsfasern 3, umfasst die Schritte des Erzeugens oder Bereitstellens eines LFT-Strangs 16, enthaltend das thermoplastische Polymer 2 und die Verstärkungsfasern 3, der Bewegung des LFT-Strangs 16 mittels eines Strangantriebs 11 in ein Heizelement 12, welches einen Heiz- und Presskanal 22 enthält, des Erwärmens des LFT-Strangs 16 im Heiz- und Presskanal 22 und des Aufschmelzens des thermoplastischen Polymers 2 im Heiz- und Presskanal 22, wodurch eine aufgeschmolzene LFT-Strangmasse 17 erhalten wird. Die aufgeschmolzene LFT-Strangmasse 17 wird in das Formwerkzeug 13 eingepresst, wobei das Formwerkzeug 13 einen Schmelzekanal 23 enthält, dessen Strömungsquerschnitt im Formwerkzeug 13 in Strömungsrichtung der aufgeschmolzenen LFT-Strangmasse 17 vergrössert wird, sodass die aufgeschmolzene LFT-Strangmasse 17 zu einer aufgeschmolzenen ULFT-Strangmasse 18 umgewandelt wird.

Die aufgeschmolzene ULFT-Strangmasse 18 wird im Formwerkzeug 13 zu einem vorgekühlten ULFT-Strang 19 vorgekühlt und in der Kühlvorrichtung 14 gekühlt, sodass ein gekühlter ULFT-Strang 21 erhalten wird. Der gekühlte ULFT-Strang 21 wird mittels einer Schneidvorrichtung 15 durchtrennt, sodass das ULFT-Granulat 1 erhalten wird. Insbesondere können die vorgängig beschriebenen Schritte sequenziell erfolgen.

Gemäss des in Fig. 3 dargestellten Ausführungsbeispiels eines Formwerkzeugs 13 weist der zweite Kanalabschnitt 25 des Formwerkzeugs 13 eine Querschnittsfläche auf, die mindestens doppelt so gross wie die Querschnittsfläche des ersten Kanalabschnittes 24 ist. Die Querschnittsfläche des Heiz- und Presskanals 22 kann der Querschnittsfläche des ersten Kanalabschnitts 24 des Schmelzekanals 23 entsprechen. Im zweiten Kanalabschnitt 25 erfolgt eine Stauchung und Umlagerung der aufgeschmolzenen LFT-Strangmasse 17. Insbesondere kann der Schmelzekanal 23 als ein zylinderförmiger, ovaler oder rechteckförmiger Innenraum des Formwerkzeugs 13 ausgebildet sein. Der Schmelzekanal 23 besteht aus dem ersten Kanalabschnitt 24 und dem zweiten Kanalabschnitt 25. Jeder der ersten und zweiten Kanalabschnitte 24, 25 kann als ein zylinderförmiger, quaderförmiger oder konischer Innenraum des Formwerkzeugs 13 mit kreisförmiger, ovaler oder rechteckförmiger Querschnittsfläche ausgebildet sein.

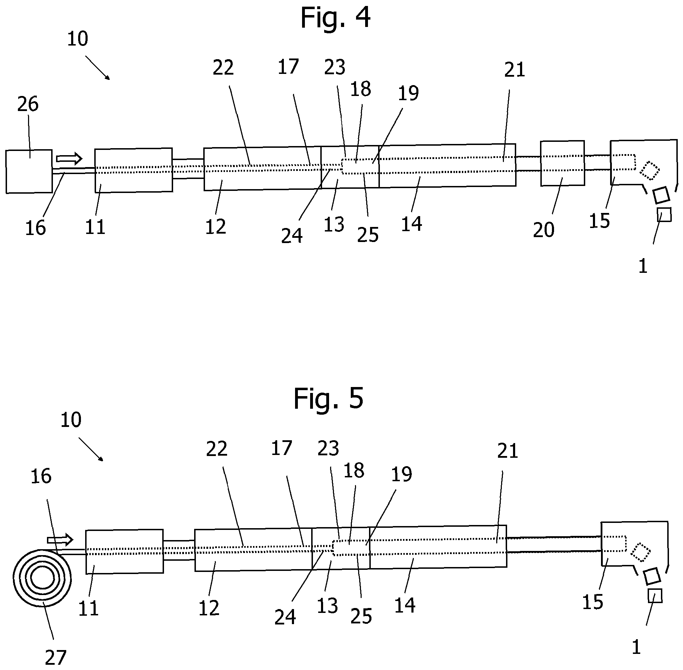

Gemäss des in Fig. 4 dargestellten Ausführungsbeispiels kann der LFT-Strang durch den Strangantrieb 11 direkt von einer Pultrusionsanlage 26 übernommen werden.

Gemäss des in Fig. 4 dargestellten Ausführungsbeispiels ist zwischen dem Formwerkzeug 13 und der Schneidvorrichtung 15 eine Abzugsvorrichtung 20 angeordnet.

Gemäss des in Fig. 5 dargestellten Ausführungsbeispiels ist auch schematisch eine Rolle 27 gezeigt, mittels welcher ein LFT-Strang 16 für die Vorrichtung 10 bereitgestellt wird. In diesem Ausführungsbeispiel kann der LFT-Strang durch den Strangantrieb 11 ab Rolle übernommen werden. Eine derartige Rolle 27 kann auch für die Ausführungsbeispiele gemäss Fig. 2 oder Fig. 4 vorgesehen werden, sie ist der Einfachheit halber in Fig. 2 und Fig. 4 weggelassen.

### Ausführungsbeispiel 1

Ein ULFT-Granulat wird hergestellt, indem man einen LFT-Strang umformt, der aus Polypropylen (PP) und Glasfasern besteht. Der Gewichtsanteil der Fasern entspricht 60% der Masse des LFT Stranges. Der LFT-Strang, mit einem Querschnitt von ca. 3.5 mm², wird dazu bei 245°C aufgeheizt und im Formwerkzeug durch Stauchung und Umlagerung zu einem Strang mit einem Durchmesser von 7.5 mm, respektive einem Querschnitt von ca. 44 mm² umgeformt und danach in ca. 12 mm lange Granulate geschnitten. Mindestens ein Teil der Glasfasern im fertigen ULFT-Granulat erreicht dabei eine Länge von ca. 140 mm. Das ULFT-Granulat wird anschliessend in einem Extruder und Spritzwerkzeug zu einem fertigen Bauteil weiterverarbeitet. Die im ULFT-Granulat kompakt eingeschlossenen, langen Fasern bleiben im Extruder besser geschützt und strecken sich erst in der Schmelze. Dadurch enthält das fertige Bauteil lange Fasern, welche dessen Steifigkeit, Festigkeit und Schlagzähigkeit entsprechend erhöht.

### Ausführungsbeispiel 2

Ein ULFT-Granulat wird hergestellt, indem man einen LFT-Strang umformt, der aus Polyamid (PA) und Glasfasern besteht. Der Gewichtsanteil der Fasern entspricht 50% der Masse des LFT Stranges. Der LFT-Strang, mit einem Querschnitt von ca. 3.5 mm², wird dazu bei 270°C aufgeheizt und im Formwerkzeug durch Stauchung und Umlagerung zu einem Strang mit einem Durchmesser von 6 mm, respektive einem Querschnitt von ca. 28 mm² umgeformt und danach in ca. 10 mm lange Granulate geschnitten. Mindestens ein Teil der Glasfasern im fertigen ULFT-Granulat erreicht dabei eine Länge von ca. 70 mm. Das ULFT-Granulat wird anschliessend in einem Extruder und Spritzwerkzeug zu einem fertigen Bauteil weiterverarbeitet. Die im ULFT-Granulat kompakt eingeschlossenen, langen Fasern bleiben im Extruder besser geschützt und strecken sich erst in der Schmelze. Dadurch enthält das fertige Bauteil lange Fasern welche dessen Steifigkeit, Festigkeit und Schlagzähigkeit entsprechend erhöht.

Es ist offensichtlich, dass viele weitere Modifikationen zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C... N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

### Bezugszeichenliste

- 1: ULFT-G (Ultra-Langfaser-Thermoplast-Granulat)
- 2: thermoplastisches Polymer
- 3: Verstärkungsfasern
- 4: Faserlänge
- 5: Längsabmessung
- 10: Vorrichtung
- 11: Strangantrieb
- 12: Heizelement
- 13: Formwerkzeug
- 14: Kühlvorrichtung
- 15: Schneidvorrichtung
- 16: LFT-Strang (Langfaser-Thermoplast-Strang)
- 17: aufgeschmolzene LFT-Strangmasse
- 18: aufgeschmolzene ULFT-Strangmasse
- 19: vorgekühlter ULFT-Strang
- 20: Abzugsvorrichtung
- 21: gekühlter ULFT-Strang (Ultra-Langfaser-Thermoplast-Strang)
- 22: Heiz- und Presskanal
- 23: Schmelzekanal
- 24: erster Kanalabschnitt (Teil des Schmelzekanals 23)
- 25: zweiter Kanalabschnitt (Teil des Schmelzekanals 23)
- 26: LFT-Strang direkt ab LFT-Pultrusionsanlage
- 27: LFT-Strang ab Rolle

## Patentansprüche

1. Verfahren zur Herstellung eines ULFT-Granulats (1) enthaltend ein thermoplastisches Polymer (2) und eine Mehrzahl von Verstärkungsfasern (3), umfassend die Schritte:
Erzeugen oder Bereitstellen eines LFT-Strangs (16), enthaltend das thermoplastische Polymer (2) und die Verstärkungsfasern (3),
Bewegen des LFT-Strangs (16) mittels eines Strangantriebs (11) in ein Heizelement (12), welches einen Heiz- und Presskanal (22) enthält,
Erwärmen des LFT-Strangs (16) im Heiz- und Presskanal (22) und Aufschmelzen des thermoplastischen Polymers (2) im Heiz- und Presskanal (22), wodurch eine aufgeschmolzene LFT-Strangmasse (17) erhalten wird,
wobei die aufgeschmolzene LFT-Strangmasse (17) in einen Schmelzekanal (23) eines Formwerkzeugs (13) eingepresst wird,
wobei der Schmelzekanal (23) einen ersten Kanalabschnitt (24) und einen zweiten Kanalabschnitt (25) enthält, wobei der zweite Kanalabschnitt (25) an den ersten Kanalabschnitt (24) anschliesst, wobei der zweite Kanalabschnitt (25) eine Querschnittsfläche aufweist, die grösser als eine Querschnittsfläche des ersten Kanalabschnitts (24) ist, sodass die aufgeschmolzene LFT-Strangmasse (17) im Formwerkzeug (13) gestaucht wird und in einen aufgeschmolzenen ULFT-Strang (18) umgewandelt wird,
wobei der aufgeschmolzene ULFT-Strang (18) im Formwerkzeug (13) gekühlt wird, sodass ein vorgekühlter ULFT-Strang (19) erhalten wird,
wobei der vorgekühlte ULFT-Strang (19) in einer Kühlvorrichtung (14) zu einem gekühlten ULFT-Strang (21) gekühlt wird,
wobei der gekühlte ULFT-Strang (21) mittels einer Schneidvorrichtung (15) durchtrennt wird, sodass das ULFT-Granulat (1) erhalten wird.

2. Verfahren nach Anspruch 1, wobei im zweiten Kanalabschnitt (25) eine Stauchung und Umlagerung der aufgeschmolzenen LFT-Strangmasse (17) zu einem aufgeschmolzenen ULFT-Strang (18) erfolgt.

3. Verfahren nach einem der vorhergehenden Ansprüche, wobei der Schmelzekanal (23) im ersten Kanalabschnitt (24) und zweiten Kanalabschnitt (25) als ein zylinderförmiger, quaderförmiger oder konischer Innenraum des Formwerkzeugs (13) mit kreisförmiger, ovaler oder rechteckförmiger Querschnittsfläche ausgebildet ist.

4. Verfahren nach einem der vorhergehenden Ansprüche, wobei das thermoplastische Polymer einen thermoplastischen Kunststoff aus der Gruppe der Polystyrole, Styrol-Acrylnitril-Copolymere (SAN), Acrylnitril-Butadien-Styrol-Copolymere (ABS), Polyolefine, Polyoxymethylene (POM), Polyvinylchloride, Polyacrylnitrile, Polyamide (PA), Polyethylenterephthalate (PET), Polybutylenterepththalate (PBT), Polycarbonate, Polymethylmethacrylate (PMMA), Polyetherimide, Polyamidimide (PAI), Polyetherketone (PEK), Polyetheretherketone (PEEK), Polyethersulfone (PES), Polyphenylensulfone (PPSU), Polyphenylensulfide (PPS), Polyacrylate, thermoplastische Elastomere (TPE), Polysulfone (PSU), Polyphthalamide (PPA), Polymilchsäuren (PLA) und andere Biopolymere oder Mischungen davon enthält.

5. Verfahren nach einem der vorhergehenden Ansprüche, wobei der gekühlte ULFT-Strang (21) der Schneidvorrichtung (15) mittels einer Abzugsvorrichtung (20) zugeführt wird, wobei die Abzugsvorrichtung (20) zwischen dem Formwerkzeug (13) und der Schneidvorrichtung (15) angeordnet ist.

6. Verfahren nach einem der vorhergehenden Ansprüche, wobei der LFT-Strang (16) direkt von einer Pultrusionsanlage (26) übernommen wird und mittels des Strangantriebs (11) dem Heiz- und Presskanal (22) zugeführt wird.

7. Verfahren nach einem der vorhergehenden Ansprüche, wobei der LFT-Strang (16) von einer Rolle (27) abgewickelt wird und mittels des Strangantriebs (11) dem Heiz-und Presskanal (22) zugeführt wird.

8. Vorrichtung (10) zur Herstellung eines ULFT-Granulats (1), wobei das ULFT-Granulat (1) ein thermoplastisches Polymer (2) und eine Mehrzahl von Verstärkungsfasern (3) enthält, wobei die Vorrichtung (10) einen Strangantrieb (11), ein Heizelement (12), ein Formwerkzeug (13), eine Kühlvorrichtung (14) und eine Schneidvorrichtung (15) umfasst, wobei im Betriebszustand ein LFT-Strang (16) mittels des Strangantriebs (11) dem Heizelement (12) zuführbar ist, wobei der Strangantrieb (11) ausgebildet ist, eine Vorschubbewegung des LFT-Strangs (16) zu erzeugen, wobei das Heizelement (12) einen Heiz- und Presskanal (22) zur Aufnahme des LFT-Strangs (16) enthält, wobei das thermoplastische Polymer (2) des LFT-Strangs (16) im Heiz-und Presskanal (22) durch das Heizelement (12) aufschmelzbar ist, sodass im Heiz-und Presskanal (22) eine aufgeschmolzene LFT-Strangmasse (17) erhältlich ist, wobei die aufgeschmolzene LFT-Strangmasse (17) in das Formwerkzeug (13) einpressbar ist, **dadurch gekennzeichnet, dass** das Formwerkzeug (13) einen Schmelzekanal (23) enthält, wobei der Schmelzekanal (23) einen ersten Kanalabschnitt (24) und einen zweiten Kanalabschnitt (25) enthält, wobei der zweite Kanalabschnitt (25) an den ersten Kanalabschnitt (24) anschliesst, wobei der zweite Kanalabschnitt (25) eine Querschnittsfläche aufweist, die grösser als eine Querschnittsfläche des ersten Kanalabschnitts (24) ist, sodass das Formwerkzeug (13) ausgebildet ist, eine Querschnittsfläche der aufgeschmolzenen LFT-Strangmasse (17) zu vergrössern, sodass eine aufgeschmolzene ULFT-Strangmasse (18) erhältlich ist, wobei die aufgeschmolzene ULFT-Strangmasse (18) im Formwerkzeug (13) und in der Kühlvorrichtung (14) kühlbar ist, sodass ein gekühlter ULFT-Strang (21) erhältlich ist, wobei der gekühlte ULFT-Strang (21) der Schneidvorrichtung (15) zuführbar ist, wobei der gekühlte ULFT-Strang (21) mittels der Schneidvorrichtung (15) in das ULFT-Granulat (1) transformierbar ist.

9. Vorrichtung nach Anspruch 8, wobei die Kühlvorrichtung (14) zwischen dem Formwerkzeug (13) und der Schneidvorrichtung (15) angeordnet ist.

10. Vorrichtung nach einem der Ansprüche 8 oder 9, wobei zwischen dem Formwerkzeug (13) und der Schneidvorrichtung (15) eine Abzugsvorrichtung (20) angeordnet ist.

11. Vorrichtung nach einem der Ansprüche 8 bis 10, wobei die Querschnittsfläche des zweiten Kanalabschnitts (25) mindestens doppelt so gross wie die Querschnittsfläche des ersten Kanalabschnitts (24) ist.

12. Vorrichtung nach einem der vorhergehenden Ansprüche 8 bis 11, wobei der Strangantrieb (11) als ein Rollenantrieb ausgebildet ist, um den LFT-Strang (16) direkt von einer LFT-Pultrusionsanlage (26) zu übernehmen, oder dem Heizelement (12) von einer Rolle (27) zuzuführen.

13. ULFT-Granulat (1), umfassend ein thermoplastisches Polymer (2) und eine Mehrzahl von Verstärkungsfasern (3), wobei die Verstärkungsfasern (3) eines LFT-Strangs (16) in einer ULFT-Strangmasse (18) gestaucht und umgelagert sind und durch Abkühlung ein vorgekühlter ULFT-Strang (19) und ein gekühlter ULFT-Strang (21) erhältlich sind, der in geschnittener Form das ULFT-Granulat (1) ergibt, wobei das ULFT-Granulat (1) eine Längsabmessung (5) aufweist, wobei die Verstärkungsfasern (3) im ULFT-Granulat (1) eine Faserlänge (4) aufweisen, wobei die Faserlänge (4) zumindest eines Teils der Verstärkungsfasern (3) im ULFT-Granulat (1) mindestens 1,5 mal so lang wie die Längsabmessung (5) ist.

14. ULFT-Granulat nach Anspruch 12, wobei die Faserlänge der Verstärkungsfasern in einem Bereich von 1 mm bis einschliesslich 200 mm liegt, wenn die Granulat-Länge im Bereich von 6 mm bis einschliesslich 16 mm liegt und die Granulat-Querschnittsfläche im Bereich von 10 mm² bis einschliesslich 80 mm² liegt.

15. ULFT-Granulat nach einem der Ansprüche 12 oder 13, enthaltend Verstärkungsfasern mit einer Faserlänge von mindestens 25 mm.
